# EUROPEAN PATENT SPECIFICATION

(11) **EP 3 643 956 B1**
(45) Date of publication and mention of the grant of the patent: **23.02.2022**
(21) Application number: 19205491.4
(22) Date of filing: 25.10.2019
(51) Int. Cl.: F16L 27/08, F16L 27/087, F16L 27/093

(54) **MEDICAL GAS DITRIBUTION APPARATUS**
MEDIKALGASSPENDER
DISTRIBUTEUR DE GAZ MÉDICAL

(30) Priority: 26.10.2018 IT 201800009832
(43) Date of publication of application: 29.04.2020
(73) Proprietor: Pres-Block S.P.A., 10040 Caselette (IT)
(72) Inventor: MONTAGONO, Massimiliano, 10040 CASELETTE (TO) (IT)
(74) Representative: D'Angelo, Fabio

(56) References cited:
- CN-A- 105 782 607
- DE-T5-112015 004 966
- DE-U1-202011 052 283
- US-A- 4 384 591
- US-A1- 2014 097 614

## Description

### CROSS-REFERENCE TO RELATED APPLICATIONS

This patent application claims priority from Italian patent application no. 102018000009832 filed on 26/10/2018.

### TECHNICAL FIELD

The invention relates to a medical gas distribution apparatus.

### BACKGROUND ART

It is commonly known that a medical gas distribution apparatus is provided with one or more sources of respective pressurised medical gases, for example oxygen or protoxide of nitrogen, and with respective delivering terminal units, which can be connected to distribution lines of the gases to patients needing them for therapeutic reasons, namely patients undergoing a so-called "gas therapy".

Moreover, a medical gas distribution apparatus usually includes at least one vacuum source, namely an aspirator, which is associated with a further corresponding sucking terminal unit for the expulsion of anaesthetic medical gases or the surgical removal of body fluids.

The terminal units are connected to the respective sources by means of corresponding one-piece joints, which are each coupled to the relative terminal unit in a direct manner.

International rules regulating the means to be used in medical gas distribution apparatuses, such as for example standard UNI EN ISO 7396-1, involves that each terminal unit for the delivery of a specific gas or for the suction through vacuum to be different, from an aesthetic and structural point of view, from other terminal units for distinct purposes, so that it can be directly distinguished, without any doubt, by medical operators.

This peculiar aspect is often referred to, in the technical language, as "gas specificity".

Alike, the same rules require that each joint have to have a structure that allows it to be exclusively coupled to the corresponding terminal unit.

Therefore, the joint cannot be a common joint like the ones disclosed, for example, in DE112015004966T5, DE202011052283 or in US2014097614, which are unsuitable for being used in a medical gas distribution apparatus.

CN105782607A discloses a medical gas distribution apparatus according to the preamble of claim 1.

Generally speaking, the existing medical gas distribution apparatuses need to be improved, in particular from the point of view of the flexibility of location of the terminal units and sources.

Indeed, the constructive shape of known suitable joints is generally designed to adjust to the specific collocation of the terminal units and of the respective sources. In other words, each joint have different constructive shapes depending on the collocation of the specific terminal unit relative to the source.

### DISCLOSURE OF INVENTION

Therefore, the object of the invention is to provide a medical gas distribution apparatus, which is capable of fulfilling the need discussed above in a simple and economic fashion.

According to the invention, there is provided a medical gas distribution apparatus as set forth in claim 1.

### BRIEF DESCRIPTION OF THE DRAWINGS

The invention will now be described with reference to the accompanying drawings, which show a non-limiting embodiment thereof, wherein:
- figure 1 shows, in a perspective exploded view and in a schematic manner, a medical gas distribution apparatus according to the invention;
- figure 2 is a cross section, on a larger scale, according to plane II-II of figure 1;
- figure 3 is a front view of a joint of the apparatus of figure 1; and
- figure 4 is a lateral-rear perspective view of the joint.

### BEST MODE FOR CARRYING OUT THE INVENTION

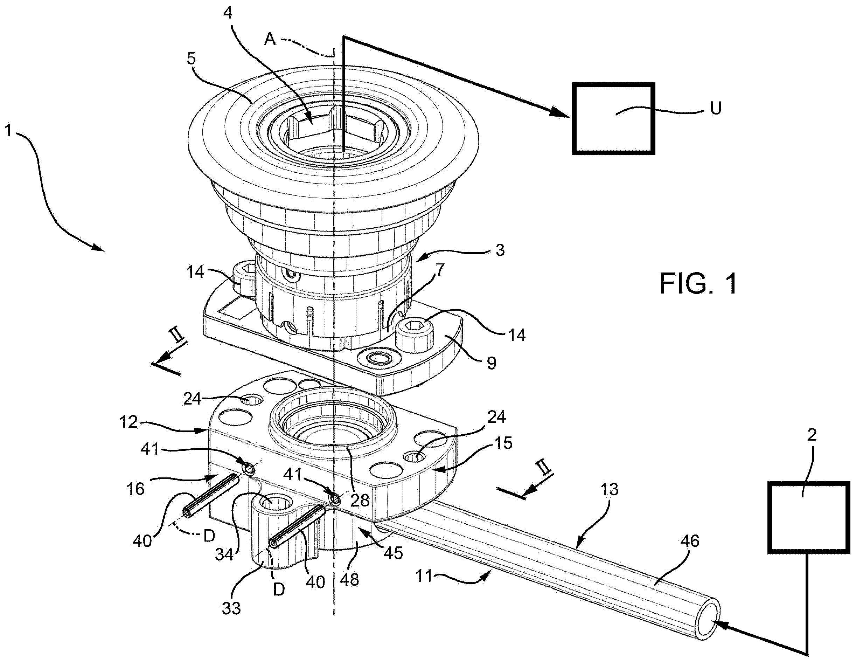

In figure 1, number 1 indicates, as a whole, a medical gas distribution apparatus, some components of its being shown only in a schematic form.

The apparatus 1 comprises at least one source 2 of a specific pressurised medical gas, for example pure oxygen, protoxide of nitrogen or air, or of vacuum, for example a vacuum pump suited to suck anaesthetic gases or body fluids.

Furthermore, the apparatus 1 comprises a delivering or sucking terminal unit 3, which is specifically designed to deliver the particular medical gas of the source 2 to a utility U or to suck anaesthetic gases or body fluids from the utility U, in compliance with standards UNI EN ISO 7396-1, UNI EN ISO 9170-1, UNI 9507, DIN 13260-2, BS 5682, UNI ENV 737-6, SS 875 24 30, NF S 90-116, FD S 90-119, UNI EN ISO 18082, AS 2902, JIS T 7101, SANS 1409 and CGA V-5.

The terminal unit 3 comprises a gas-delivering or gas-sucking annular mouth 4, which is arranged around an axis A and extends along the axis A between an end 5 connected to the utility U and an opposite end 7. Furthermore, the terminal unit 3 comprises a plate 9, which is oriented orthogonally relative to the axis A, is perforated in a through manner around the axis A, is arranged so as to surround the end 7 and is fixed to the latter so as to allow a gas flow between the end 7 of the mouth 4 and the utility U.

The apparatus 1 can further comprises further delivering or sucking terminal units, similar to the terminal unit 3.

In order to fluidically join the source 2 to the terminal unit 3, the apparatus 1 comprises a joint 11, which, in turn, comprises a support element 12 and a gas feeding element 13, which is carried by the support element 12, projects from the latter and is designed to be connected to the source 2 so as to obtain from the latter the gas to be fed to the mouth 4 or so as to receive from the mouth 4 the anaesthetic gases or the body fluids to be fed to the source 2.

In particular, the support element 12 is designed to be coupled, in use, to the plate 9 along the axis A by means of screws 14.

The gas feeding element 13, in use, is in fluid communication with the end 7 of the terminal unit 3 and radially extends from the axis A, along an axis B, towards the source 2.

According to the specific example shown in the accompanying figures, the support element 12 comprises an interface plate 15, which, in use, extends along a plane orthogonal to the axis A and is designed to be laid in contact with and be fixed to the plate 9 of the terminal unit 3, and a receiving portion 16, which defines a housing for the gas feeding element 13, as explained more in detail below.

The support element 12 preferably consists of one single body, which, in turn, is defined by the plate 15 and by the receiving portion 16 integrated with one another. The plate 15 and the receiving portion 16 are conveniently made of a metal material having known lightness and ductility properties, so that they can easily be moulded. For example, said metal material is a zinc alloy also known as ZAMAK^{®}.

In particular, the plate 15 comprises two or more fixing elements 24, which allow a releasable coupling of the plate 15 to the plate 9. The fixing elements 24 are preferably arranged in a uniform and symmetrical manner around the axis A, so that the support element 12 can be coupled to the terminal unit 3 having at least two different orientations relative to the axis A.

In particular, the plate 15 comprises a pair of fixing elements 24, which are arranged in diametrically opposite positions relative to the axis A, namely are angularly spaced apart from one another by 180° relative to the axis A and, more specifically, are aligned along a direction of maximum extension of the plate 15, radial relative to the axis A.

In the example shown, the fixing elements 24 are defined by threaded holes with an axis parallel to the axis A, into which the screws going through the plate 9 are screwed.

Furthermore, for the coupling to the plate 9, the plate 15 further comprises an axial projection 28 with a preferably annular shape with axis A, which is coupled to a corresponding annular groove made in the plate 9. The axial projection 28 surrounds a hole 29, which extends through the plate 15 and defines at least a portion of the aforesaid housing for the gas feeding element 13.

The fixing elements 24 and the axial projection 28 fulfil the "gas specificity" function mentioned above. In particular, the fixing elements 24 and the axial projection 28 define a predetermined interface dedicated to the delivery of a given medical gas or to the suction of anaesthetic gases or body fluids depending on the particular terminal unit 3 with which it is specifically suited to cooperate in order to allow for a one-to-one coupling of the support element 12 to the terminal unit 3.

Alternatively, the fixing elements 24 and, especially, the axial projection 28 can be replaced by further elements with a distinct shape and collocation as well as defining respective interfaces which are specifically suited to allow for a one-to-one coupling of the support element 12 to terminal units that are different from the terminal unit 3.

With reference to figures 1, 2 and 4, the receiving portion 16 comprises a substantially U-shaped wall 30, which extends parallel to the axis A and peripherally projects in a cantilevered manner from a portion of the plate 15 and on the opposite side of the plate 15 relative to the plate 9.

The wall 30 delimits, around the axis A and with the plate 15, a cavity 31, which is open in the direction of radial extension of the gas feeding element 13 and on the opposite side of the plate 15 along the axis A. In particular, the cavity 31 defines, together with the hole 29, the aforesaid housing for the gas feeding element 13.

The wall 30 has, in the radial opening area of the cavity 31, a pair of inner faces 32, which are diametrically opposite relative to the axis A and have a concave shape, more in particular such as to define two corresponding portions of an ideal cylindrical surface around the axis A.

Furthermore, the wall 30 has, at least at its free ends, respective ears 33 projecting outwards and carrying respective fixing elements 34, which are preferably defined by respective seats for bolts or threaded holes and are designed to allow the support element 12 to be fixed to a not shown support member.

According to an aspect of the invention, the gas feeding element 13 can be oriented around the axis A relative to the support element 12. In other words, the gas feeding element 13 engages the housing defined by the support element 12 in a rotary manner around the axis A.

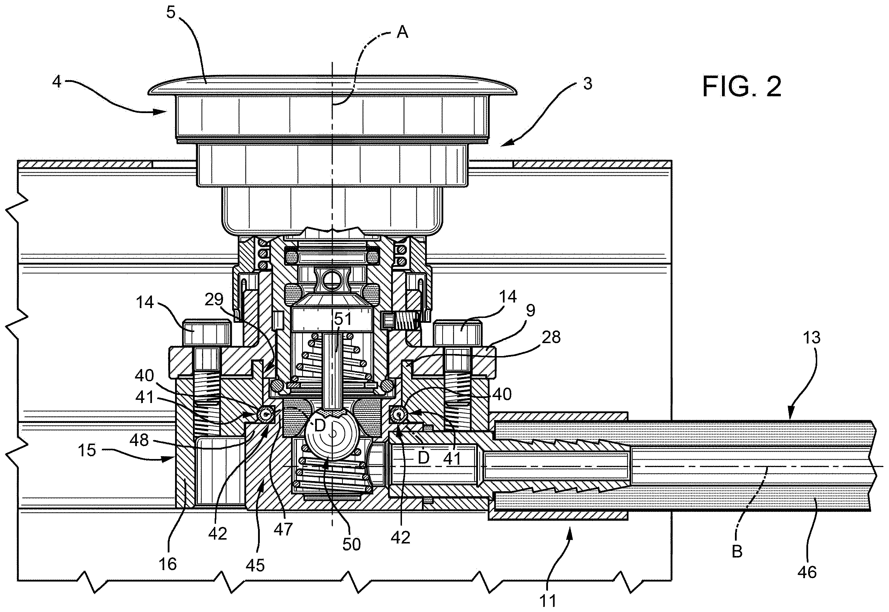

The gas feeding element 13 is preferably coupled to the support element 12 in a releasable manner by means of a plurality of elastic pins 40. Each elastic pin 40 engages two seats 41, 42 (figures 1 and 2) aligned with one another along a corresponding axis D, which is orthogonal to the axis A and transverse to the axis B, and respectively obtained in a through manner in the plate 15 and in the gas feeding element 13.

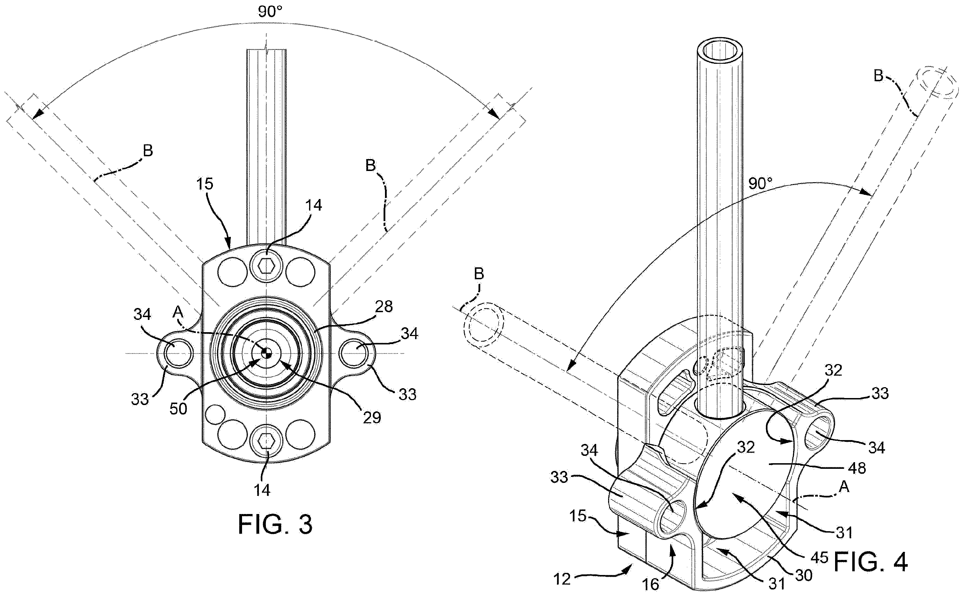

The elastic pins 40 forbid relative movements along the axis A between the gas feeding element 13 and the support element 12, but permit the rotation of the gas feeding element 13 relative to the support element 12. In particular, the elastic pins 40 permit at least a rotation with an angular extent of 90°, as shown in figure 4.

The rotation of the gas feeding element 13 is anyway limited by the ears 33, which, in particular, define two angular limit stop abutments spaced apart from one another by an angle of 90°.

According to a not shown alternative, the gas feeding element 13 could form an interference fit with the support element 12 through the interposition of an elastic member. Said elastic element would conveniently be defined by a stop ring that is cut longitudinally so as to have a torsional elasticity that is such as to allow the gas feeding element 13 to rotate relative to the support element 12.

As a further alternative, the gas feeding element 13 could be formed as a single body with the support element 12 and have a torsional stiffness that is such as to allow it to elastically rotate relative to the support element 12 in order to define a virtual hinge with the support element 12 itself.

The gas feeding element 13 preferably comprises a hollow core 45, which is coaxial to the axis A. Furthermore, the gas feeding element 13 comprises a tube 46, which extends along the axis B orthogonally to the axis A and has two opposite ends connected to the source 2 and to the core 45, respectively, so as to be in fluid communication with the core 45. For example, the tube 46 is fixed to the core 45 and is preferably welded to the core 45.

According to figure 2, the core 45 has, in particular, a portion with a smaller diameter 47, which engages the hole 29, and a portion with a greater diameter 48, which radially cooperates in contact with the faces 32.

The core 45 is preferably made of a metal material which is more resistant to corrosion than the one of the support element 12, for example brass. On the other hand, the tube 46 can be made of a metal material which is more ductile and economic than the one of the core 45, for example copper.

The joint 11 further comprises a valve 50, in particular a ball valve, to avoid an outflow of gas coming from the source 2 when the terminal unit 3 is disconnected from the support element 12.

In figure 2, the valve 50 is coupled to the core 45 and cooperates with a member (in particular, a rod 51) of the terminal unit 3 in order to be held in an open configuration, in which the end 7 and the core 45 are in fluid communication. When, on the other hand, the support element 12 is uncoupled from the terminal unit 3, the valve 45 is in a closed configuration, in which it closes the gas feeding element 13.

Owing to the above, the advantages of the apparatus 1 are evident.

Thanks to the fact that the gas feeding element 13 can be oriented, the tube 46 can assume different positions and be connected to sources placed differently in the apparatus 1. Furthermore, the uniform distribution of the fixing elements 24 around the axis A allows the orientation of the tube 46 along any radial direction.

The support element 12 only fulfils a support function and, therefore, it can be made of a material that is different from the one of the gas feeding element 13. In particular, zinc alloys are lighter and can more easily be processed by means of moulding compared to brass, which is the most commonly used material for known joints.

The support element 12 can be uncoupled from the terminal unit 3, so that maintenance operations and/or operations for the replacement of components of the apparatus 1 can be possible. To this regard, the valve at least helps limiting gas leaks during these operations, with no need to turn off the source 2.

Furthermore, thanks to the fact that the gas feeding element 13 is manufactured separately from the support element 12, it is possible to carry out economies of scale in the production of the gas feeding element 13; indeed, said gas feeding element 13 can be manufactured in one single configuration, which can then be coupled to different versions of the support element 12 having different interface portions (plate 15 and projection 28) for the different types of medical gases distributed.

Finally, it is evidently possible to provide variants of the apparatus 1 which do not go beyond the scope of protection set forth in the claims.

## Claims

1. A medical gas distribution apparatus comprising at least a source (2) of pressurised gas or of vacuum and at least a terminal unit (3) for delivering a specific gas or for suction by means of vacuum, and a joint (11) connecting said source (2) and said terminal unit (3),
wherein the terminal unit (3) comprises an annular mouth (4), which extends around and along a first axis (A) between a first and a second end (5, 7), and a plate (9) oriented orthogonally to the first axis (A), having a through hole around the first axis (A), and fixed to the second end (7) with the through hole surrounding the second end (7);
said joint (11) comprising:
- a support element (12) that internally defines a first duct extending along the first axis (A) and that comprises a receiving portion (16) and an interface plate (15, 28) fixing the same support element (12) to the plate (9) of said terminal unit (3) with the interface plate (15, 28) extending orthogonally to the first axis (A) in contact with the plate (9); and
- a gas feeding element (13), which is carried by said support element (12), is housed within a housing defined by the receiving portion (16), is connected to said source (2), and internally defines a second duct in fluidic communication with said first duct and extending along a second axis (B) transversal to said first axis (A) ;
wherein said gas feeding element (13) is orientable about said first axis (A) with respect to said support element (12),
wherein said interface plate (15, 28) comprises engagement means (28) for coupling said support element (12) to said terminal unit (3) in one or more predetermined orientations with respect to said first axis (A), wherein the engagement means (28) comprise a projection (28) extending along the first axis (A),
**characterized in that** the projection (28) surrounds a hole (29) extending through the interface plate (15, 28) and at least partially defining said housing.

2. The apparatus according to claim 1, wherein said interface plate (15, 28) comprises a plurality of fixing elements (24) that define with said projection (28) a predetermined interface adapted to cooperate with the terminal unit (3) to allow for a one-to-one coupling of the support element (12) to the terminal unit (3), the interface being dedicated to the delivery of a given medical gas or to the suction by means of vacuum.

3. The apparatus according to claim 2, wherein the fixing elements (24) are uniformly and symmetrically arranged around the first axis (A), such that the support element (12) can be coupled to the terminal unit (3) having at least two different orientations relative to the first axis (A).

4. The apparatus according to any one of the preceding claims, wherein said support element (12) and said gas feeding element (13) respectively comprise a first and a second metal material, said second metal material having a specific weight lower than the specific weight of said first metal material.

5. The apparatus according to any one of the preceding claims, wherein said gas feeding element (13) and said support element (12) are separated components and, in use, are coupled to each other.

6. The apparatus according to any one of the preceding claims, wherein said gas feeding element (13) is coupled to said support element (12) by means of releasable coupling means (40, 41, 42).

7. The apparatus according to claim 6, wherein said coupling means (40, 41, 42) comprise a plurality of elastic pins (40) and for each said elastic pin (40) a first and a second pin seat (41, 42) aligned with each other along respective directions (D) orthogonal to said first axis (A) and respectively obtained in said support element (12) and in said gas feeding element (13).

8. The apparatus according to any one of the preceding claims, wherein said gas feeding element (13) comprises:
- a hollow core (45) coaxial to said first axis (A), coupled in use to a relative seat (29, 31) of said support element (12) in a rotatable manner about said first axis (A) and, preferably, comprising brass; and
- a tubular element (46) extending along said second axis (B), coupled to said core (45) and, preferably, comprising copper.

9. The apparatus according to any one of the preceding claims, comprising a valve (50) that is coupled to said gas feeding element (13) in a closed condition for closing said first duct and configurable in an open condition, at least when said support element (12) is coupled to said terminal unit (3), so as to place said gas feeding element (13) in fluidic communication with said terminal unit (3).

## Patentansprüche

1. Vorrichtung zur Verteilung von medizinischen Gasen, umfassend mindestens eine Quelle (2) an Druckgas oder an Vakuum und mindestens eine Entnahmeeinheit (3) zur Abgabe eines bestimmten Gases oder für die Ansaugung mittels Vakuum, und eine Verbindung (11), welche die Quelle (2) mit der Entnahmeeinheit (3) verbindet,
wobei die Entnahmeeinheit (3) einen ringförmigen Mund (4) umfasst, der sich um und entlang einer ersten Achse (A) zwischen einem ersten und einem zweiten Ende (5, 7) erstreckt, und eine Platte (9), die orthogonal zu der ersten Achse (A) ausgerichtet ist, die ein Durchgangsloch um die erste Achse (A) aufweist und an dem zweiten Ende (7) befestigt ist, wobei das Durchgangsloch das zweite Ende (7) umgibt;
wobei die Verbindung (11) umfasst:
ein Unterstützungselement (12) das im Inneren einen ersten Kanal definiert, der sich entlang der ersten Achse (A) erstreckt, und das einen Aufnahmeabschnitt (16) und eine Schnittstellenplatte (15, 28) umfasst, die dasselbe Unterstützungselement (12) an der Platte (9) der Entnahmeeinheit (3) befestigt, wobei sich die Schnittstellenplatte (15, 28) orthogonal zur ersten Achse (A) in Kontakt mit der Platte (9) erstreckt; und
ein Gaszuführungselement (13), das von dem Unterstützungselement (12) getragen wird, in einem durch den Aufnahmeabschnitt (16) definierten Gehäuse untergebracht ist, mit der Quelle (2) verbunden ist und intern einen zweiten Kanal definiert, der in Fluidverbindung mit dem ersten Kanal steht und sich entlang einer zweiten Achse (B) quer zu der ersten Achse (A) erstreckt;
wobei das Gaszuführelement (13) um die erste Achse (A) in Bezug auf das Unterstützungselement (12) ausrichtbar ist,
wobei die Schnittstellenplatte (15, 28) Eingriffsmittel (28) zum Koppeln des Unterstützungselements (12) mit der Entnahmeeinheit (3) in einer oder mehreren vorbestimmten Ausrichtungen in Bezug auf die erste Achse (A) umfasst, wobei die Eingriffsmittel (28) einen Vorsprung (28) umfassen, der sich entlang der ersten Achse (A) erstreckt,
**dadurch gekennzeichnet, dass** der Vorsprung (28) ein Loch (29) umgibt, das sich durch die Schnittstellenplatte (15, 28) erstreckt und zumindest teilweise das Gehäuse definiert.

2. Vorrichtung nach Anspruch 1, wobei die Schnittstellenplatte (15, 28) eine Vielzahl von Befestigungselementen (24) umfasst, die mit dem Vorsprung (28) eine vorbestimmte Schnittstelle definieren, die ausgebildet ist, mit der Entnahmeeinheit (3) zusammenzuwirken, um eine Eins-zu-Eins-Kopplung des Unterstützungselements (12) mit der Entnahmeeinheit (3) zu ermöglichen, wobei die Schnittstelle für die Abgabe eines bestimmten medizinischen Gases oder für die Absaugung mittels Vakuum bestimmt ist.

3. Vorrichtung nach Anspruch 2, wobei die Befestigungselemente (24) gleichmäßig und symmetrisch um die erste Achse (A) angeordnet sind, so dass das Unterstützungselement (12) in mindestens zwei verschiedenen Ausrichtungen relativ zur ersten Achse (A) an die Entnahmeeinheit (3) gekoppelt werden kann.

4. Vorrichtung nach einem der vorstehenden Ansprüche, wobei das Unterstützungselement (12) und Gaszuführungselement (13) jeweils aus einem ersten und einem zweiten metallischen Werkstoff bestehen, wobei das spezifische Gewicht des zweiten metallischen Werkstoffs geringer ist als das spezifische Gewicht des ersten metallischen Werkstoffs.

5. Vorrichtung nach einem der vorstehenden Ansprüche, wobei das Gaszuführungselement (13) und das Unterstützungselement (12) getrennte Komponenten sind und im Gebrauch aneinandergekoppelt sind.

6. Vorrichtung nach einem der vorstehenden Ansprüche, wobei das Gaszuführungselement (13) mit dem Unterstützungselement (12) mittels lösbarer Verbinder (40, 41, 42) gekoppelt ist.

7. Vorrichtung nach Anspruch 6, wobei die Verbinder (40, 41, 42) eine Vielzahl an elastischen Stifte (40) und für jeden elastischen Stift (40) einen ersten und zweiten Stiftsitz (41, 42) umfassen, die entlang der jeweiligen Richtungen (D) orthogonal zu der ersten Achse (A) miteinander ausgerichtet sind und jeweils in dem Unterstützungselement (12) und in dem Gaszuführungselement (13) aufgenommen werden.

8. Vorrichtung nach einem der vorstehenden Ansprüche, wobei das Gaszuführungselement (13) Folgendes umfasst:
einen zur ersten Achse (A) koaxialen Hohlkern (45), der im Gebrauch mit einem relativen Sitz (29, 31) des Unterstützungselements (12) um die erste Achse (A) drehbar gekoppelt ist und vorzugsweise Messing umfasst; und
ein rohrförmiges Element (46), das sich entlang der zweiten Achse (B) erstreckt, mit dem Kern (45) verbunden ist und vorzugsweise aus Kupfer besteht.

9. Die Vorrichtung nach einem der vorstehenden Ansprüche, umfassend einem Ventil (50) das mit dem Gaszufuhrelement (13) in einem geschlossenen Zustand gekoppelt ist, um den ersten Kanal zu schließen, und das in einem offenen Zustand konfigurierbar ist, zumindest wenn das Unterstützungselement (12) mit der Entnahmeeinheit (3) gekoppelt ist, um das Gaszufuhrelement (13) in Fluidverbindung mit der Entnahmeeinheit (3) zu bringen.

## Revendications

1. Appareil de distribution de gaz médical comprenant au moins une source (2) de gaz comprimé ou de vide et au moins une unité terminale (3) pour distribution d'un gaz spécifique ou pour aspiration par le vide, et un raccord (11) reliant ladite source (2) et ladite unité terminale (3),
dans lequel l'unité terminale (3) comprend une embouchure annulaire (4), qui s'étend autour et le long d'un premier axe (A) entre une première et une seconde extrémité (5, 7), et une plaque (9) orientée de manière orthogonale au premier axe (A), présentant un trou traversant autour du premier axe (A), et fixée à la seconde extrémité (7), avec le trou traversant entourant la seconde extrémité (7) ;
ledit raccord (11) comprenant :
- un élément de support (12) qui définit intérieurement un premier conduit s'étendant le long du premier axe (A) et qui comprend une partie de réception (16) et une plaque d'interface (15, 28) fixant ce même élément de support (12) à la plaque (9) de ladite unité terminale (3) avec la plaque d'interface (15, 28) s'étendant de manière orthogonale au premier axe (A) en contact avec la plaque (9) ; et
- un élément d'acheminement de gaz (13), qui est porté par ledit élément de support (12), est logé dans un logement défini par la partie de réception (16), est relié à ladite source (2) et définit intérieurement un second conduit en communication fluidique avec ledit premier conduit et s'étendant le long d'un second axe (B) transversal audit premier axe (A) ;
dans lequel ledit élément d'acheminement de gaz (13) est orientable autour dudit premier axe (A) par rapport audit élément de support (12),
dans lequel ladite plaque d'interface (15, 28) comprend un moyen de mise en prise (28) pour coupler ledit élément de support (12) à ladite unité terminale (3) dans une ou plusieurs orientations prédéterminées par rapport audit premier axe (A), dans lequel le moyen de mise en prise (28) comprend une projection (28) s'étendant le long du premier axe (A),
**caractérisé en ce que** la projection (28) entoure un trou (29) s'étendant à travers la plaque d'interface (15, 28) et définissant au moins partiellement ledit logement.

2. Appareil selon la revendication 1, dans lequel ladite plaque d'interface (15, 28) comprend une pluralité d'éléments de fixation (24) qui définissent avec ladite projection (28) une interface prédéterminée adaptée pour coopérer avec l'unité terminale (3) afin de permettre un couplage biunivoque de l'élément de support (12) à l'unité terminale (3), l'interface étant dédié à la distribution d'un gaz médical donné ou à l'aspiration par le vide.

3. Appareil selon la revendication 2, dans lequel les éléments de fixation (24) sont agencés de manière uniforme et symétrique autour du premier axe (A), de telle sorte que l'élément de support (12) peut être couplé à l'unité terminale (3) présentant au moins deux orientations différentes par rapport au premier axe (A).

4. Appareil selon l'une quelconque des revendications précédentes, dans lequel ledit élément de support (12) et ledit élément d'acheminement de gaz (13) comprennent respectivement un premier et un second matériau métallique, ledit second matériau métallique présentant un poids spécifique inférieur au poids spécifique dudit premier matériau métallique.

5. Appareil selon l'une quelconque des revendications précédentes, dans lequel ledit élément d'acheminement de gaz (13) et ledit élément de support (12) sont des composants séparés et, lors de l'utilisation, sont couplés l'un à l'autre.

6. Appareil selon l'une quelconque des revendications précédentes, dans lequel ledit élément d'acheminement de gaz (13) est couplé audit élément de support (12) à l'aide de moyens de couplage amovible (40, 41, 42).

7. Appareil selon la revendication 6, dans lequel lesdits moyens de couplage amovible (40, 41, 42) comprennent une pluralité de chevilles élastiques (40) et pour chaque dite cheville élastique (40) un premier et un second siège de cheville (41, 42) alignés l'un sur l'autre le long de directions (D) respectives orthogonales audit premier axe (A) et respectivement obtenus dans ledit élément de support (12) et dans ledit élément d'acheminement de gaz (13).

8. Appareil selon l'une quelconque des revendications précédentes, dans lequel ledit élément d'acheminement de gaz (13) comprend :
- un cœur creux (45) coaxial audit premier axe (A), couplé lors de l'utilisation à un siège (29, 31) relatif dudit élément de support (12) d'une manière rotative autour dudit premier axe (A) et, de préférence, comprenant du laiton ; et
- un élément tubulaire (46) s'étendant le long dudit second axe (B), couplé audit cœur (45) et, de préférence, comprenant du cuivre.

9. Appareil selon l'une quelconque des revendications précédentes, comprenant un clapet (50) qui est couplé audit élément d'acheminement de gaz (13) dans un état fermé pour fermer ledit premier conduit et configurable dans un état ouvert, au moins lorsque ledit élément de support (12) est couplé à ladite unité terminale (3), de manière à placer ledit élément d'acheminement de gaz (13) en communication fluidique avec ladite unité terminale (3).
